# EUROPEAN PATENT SPECIFICATION

(11) **EP 3 132 161 B1**
(45) Date of publication and mention of the grant of the patent: **11.11.2020**
(21) Application number: 14889297.9
(22) Date of filing: 15.04.2014
(51) Int. Cl.: F16J 15/08, F16J 15/06, F16J 15/10, F16L 23/22

(54) **EZ-SEAL ASSEMBLY JOINING FLUID PATHWAYS**
EZ-DICHTUNG VERBINDUNG VON FLÜSSIGKEITSWEGEN
ASSEMBLAGE D'ÉTANCHÉITÉ EZ RÉUNISSANT DES PASSAGES DE FLUIDE

(43) Date of publication of application: 22.02.2017
(73) Proprietor: Vu, Kim Ngoc, Yorba Linda, CA 92887-3284 (US); Vistadeltek, LLC, Yorba Linda, CA 92887-3284 (US)
(72) Inventor: VU, Kim, Ngoc, Yorba Linda, CA 92887-3284 (US)
(74) Representative: HGF
(86) International application number: PCT/US2014/034256
(87) International publication number: WO 2015/160336

(56) References cited:
- JP-A- H0 881 968
- JP-A- H09 222 168
- JP-A- H10 227 363
- JP-A- 2004 052 900
- US-A- 3 909 019
- US-A- 3 930 656
- US-A- 6 123 338
- US-A1- 2007 262 581
- US-A1- 2009 026 716
- US-A1- 2009 315 274
- US-B1- 6 619 668

## Description

### Field of the Invention

The present invention is related to malleable metallic gaskets for sealing joints between portions of a fluid pathway.

### Background of the Invention

Many combinations of interface structures and associated gaskets are well known in the design of fluid delivery systems. These structures include flanges, glands, component connections, and other elements that enable mechanical assembly of various system elements forming an arrangement of interconnected fluid pathways.

Representative fluid delivery systems are found among industrial equipment producing fine chemicals, petroleum products, or semiconductors, for example, and may be subjected to vacuum or pressure or purity requirements and/or combinations thereof. Fluid pathways among elements intended for manipulating process materials within semiconductor manufacturing equipment usually require attention to maintaining high purity of the delivered reactants, and also typically have a much smaller cross-section than fluid pathways used in petrochemical plants, for example. In many cases, practitioners have found that metallic gaskets provide superior performance, particularly regarding diffusion of process fluid or contaminants through the gasket and consequent resistance to undesirable leakage, in preference over polymer materials.

One known type of fluid pathway joint uses a ring-shaped flat metallic gasket compressed between nominally identical shaped annular projections that surround circular conduit openings of opposing apparatus elements. The annular projections are urged axially toward one another, causing permanent plastic deformation of the ductile metallic gasket to create a seal that will resist leakage of even difficult-to-contain fluids such as helium. Representative examples of such joints may be seen, for example, in U.S. Patent No. 3,208,758 issued to Carlson and Wheeler (familiarly known as the Varian® Conflat® flange), in U.S. Patent No. 3,521,910 issued to Callahan and Wennerstrom (familiarly known as the Swagelok® VCR® fitting), and in U.S. Patent No. 4,303,251, issued to Harra and Nystrom.

Another known type of fluid pathway joint uses a ring-shaped metallic gasket of complex shape compressed between nominally identical shaped annular projections that surround circular conduit openings of opposing apparatus elements. Representative examples of such joints are disclosed in U.S. Patent No. 4,854,597 to Leigh, in U.S. Patent No. 5,505,464 to McGarvey, and in U.S. Patent No. 6,135,155 to Ohmi et al. (an early version of the W-seal joint type well known now in the industry). The '155 patent additionally provides a separate retainer for holding and centering the gasket during assembly of the joint. Such separate retainer structures may also be seen in U.S. Patent No. 5,673,946 and U.S. Patent No. 5,758,910, both issued to Barber and Aldridge, and in U.S. Patent No. 7,140,647 to Ohmi et al.

Yet another known type of fluid pathway joint, familiarly known in the industry as the C-seal joint type, uses a ring-shaped metallic gasket of complex shape which is compressed between opposing apparatus elements, wherein the face of at least one element has a circular counterbore depression to receive the gasket. Representative examples of such joints are disclosed in, for example, U.S. Patent No. 5,354,072 to Nicholson, U.S. Patent No. 6,042,121, to Ma et al., U.S. Patent No. 6,357,760 and U.S. Patent No. 6,688,608, both issued to Doyle, and U.S. Patent No. 6,409,180 issued to Spence and Felber. The '180 patent to Spence and Felber additionally discloses a separate retainer for holding and centering the gasket during joint assembly. Such separate retainer structures may also be seen in U.S. Patent No. 5,730,448 to Swensen et al., U.S. Patent No. 5,984,318 to Kojima and Aoyama, U.S. Patent No. 6,845,984 to Doyle, and U.S. Patent No. 6,945,539 to Whitlow et al.

Still another known type of fluid pathway joint, known in the industry as the Z-Seal type, uses a ring-shaped flat metallic gasket compressed between opposing apparatus elements wherein mating features surrounding circular conduit openings create corners that shear into the gasket. This type of corner-shear joint is illustrated in U.S. Patent No. 5,803,507 and U.S. Patent No. 6,394,138, both issued to the present inventor, Kim Ngoc Vu, and it also utilizes a retainer structure.

JPH09222168 discloses an anti-germ seal material for a fluid pathway and a corner-shear joint assembly according to the preamble of claim 1.

In the majority of the preceding design examples, there is considerable risk of adversely scratching a face of the gasket prior to joint assembly and such damage thereby making a joint free of leaks unachievable. Gasket centering by a separate retainer provides a desirable consistency of alignment between the fluid pathway conduit ports and the central passageway through the gasket, but incurs undesirable added expense. Within some fluid delivery systems used for semiconductor manufacturing processes, there are situations using multiple types of pathway joints simultaneously, and that situation requires equipment maintenance personnel to stock and have available an undesirably large inventory of various kinds of spare gaskets.

### Summary of the Invention

In consideration of the foregoing, the present invention provides a joint assembly as defined in the appended claims. More particularly, the present invention addresses the issues noted above, by providing an easily made single-piece malleable metallic gasket, incorporating protection of the sealing regions, that is also self-centering. The inventive gasket is a ring-shaped part which may be described as a torus generated by rotating a cross-sectional profile having specific characteristics about the central axis of the ring.

The gasket torus typically has an inner diameter corresponding to roughly the inner diameter of the fluid pathway conduits, and an outer diameter proscribed by constraints of the mating apparatus elements. The gasket torus has a first axial end surface sealing region that is orthogonal to the axis of the gasket central fluid pathway hole, and is generally flat. The gasket torus also has a second axial end surface sealing region, opposite the first axial end surface sealing region, that is orthogonal to the axis of the gasket central fluid pathway hole and is also generally flat. The first axial end surface sealing region surrounds an inner raised lip of sufficient axial extent to protect the first end surface sealing region, and has a diameter smaller than the first sealing region. The second axial end surface sealing region is surrounded by an outer raised lip of sufficient axial extent to protect the second end surface sealing region, and has a diameter greater than the second sealing region. The inner raised lip and outer raised lip may each extend axially a convenient distance (such as 0.010 inch, which converts to about 0.25 mm) beyond the corresponding adjacent sealing region. The inner raised lip and outer raised lip may have most any convex profile, but a smoothly curved outermost portion with tapering sides is easily machined, and minimizes the chances for snagging or scraping the gasket during fluid delivery assembly in clean room conditions typically used for semiconductor equipment.

Gaskets intended for use with corner-shear joint types will usually have the inner diameter of the flat first axial end surface sealing region be nominally the same as the outer diameter of the flat second axial end surface sealing region. Another embodiment of the gasket may have the inner diameter of the flat first axial end surface sealing region be nominally the same as the outer diameter of the flat second axial end surface sealing region. Another embodiment of the gasket may have the inner diameter of the first sealing surface be less than the outer diameter of the second sealing surface to ease use with VCR® joint types. A useful variation of the inventive gasket lacks any hole piercing the material of the gasket and thus may function as a blank-off closure that prevents flow through a fluid conduit as is known in the art. A further variation of the inventive gasket has one or more small holes piercing the material of the gasket, rather than a large central hole, and thus may function to reduce or limit flow through a fluid conduit as is also known in the art (see U.S. Patent No. 7,874,208 for an example application of this function using a corner-shear joint type).

More particularly, there is provided in a disclosed embodiment a malleable gasket suitable for high purity fluid delivery systems. The gasket comprises a first side, an opposed second side, and an outer circumference, and further comprises a raised inner lip on the first side and a raised outer lip on the second side, wherein the raised inner lip and the raised outer lip are circumferentially spaced from one another. In the illustrated embodiments, the gasket is round.

The first side of the gasket comprises a flat first sealing region disposed outwardly of the raised inner lip, while the second side of the gasket comprises a flat second sealing region disposed inwardly of the raised outer lip. As illustrated, the first side of the gasket is a mirror image of the second side of the gasket. The first side of the gasket further comprises a circular sector forming a part of the raised inner lip, an outward tapering portion extending from the circular sector, and a smooth curve extending outwardly from the tapering portion and joining the flat first sealing region. The second side of the gasket further comprises a circular sector forming a part of the raised outer lip, an inwardly tapering portion extending from the circular sector, and a smooth curve extending inwardly from the tapering portion and joining the flat second sealing region. The comprises a torus having an inner circumference defining a central axial bore, and each of the flat first sealing region and the flat second sealing region are substantially orthogonal to the axis of the central axial bore.

The gasket is disposed in a sealing arrangement within a fluid passageway formed by assembled members having a joint comprising each of a joint counterbore portion and a joint groove portion, a counterbore corner extending from the joint counterbore portion and a groove portion corner extending from the joint groove portion, and further wherein the inner raised lip aligns the gasket with the joint counterbore portion and the outer raised lip aligns the gasket with the joint groove portion, such that when the joint is completely assembled, the counterbore corner shears into the gasket first sealing region and the groove portion corner shears into the gasket second sealing region.

The invention, together with additional features and advantages thereof, may be best understood by reference to the following description taken in conjunction with the accompanying illustrative drawings. In these accompanying drawings, like reference numerals designate like parts throughout the figures.

### Brief Description of the Drawings

Fig. 1a is a top view of a gasket constructed in accordance with one embodiment of the present invention;
Fig. 1b is a cross-sectional view taken along line A-A of the gasket shown in Fig. la;
Fig. 1c is an isometric view of a portion of the gasket of Figs. 1a and 1b;
Fig. 2 is an enlarged detail of the portion of Fig. 1b identified by the letter "B";
Fig. 3a is a top view of a portion of a fluid delivery system having planar corner-shear fluid delivery elements and using the gasket of the present invention;
Fig. 3b is a cross-sectional view of the system of Fig. 3a, taken along line A-A;
Fig. 3c is an isometric cross-sectional view of the system of Figs. 3a and 3b;
Fig. 3d is an enlarged cross-sectional view of the portion of Fig. 3b denoted by the letter "C";
Fig. 4a is a top view of a portion of a fluid delivery system having a combination of recessed and planar corner-shear joint fluid delivery elements and using the gasket of the present invention;
Fig. 4b is a cross-sectional view of the system of Fig. 4a, taken along line A-A;
Fig. 4c is an isometric cross-sectional view of the system of Figs. 4a and 4b;
Fig. 4d is an enlarged cross-sectional view of the portion of Fig. 4b denoted by the letter "D";
Fig. 5a is a top view of a portion of a fluid delivery system with yet other recessed corner-shear joint fluid delivery elements and using the gasket of the present invention;
Fig. 5b is a cross-sectional view of the system of Fig. 5a, taken along line A-A;
Fig. 5c is an isometric cross-sectional view of the system of Figs. 5a and 5b; and
Fig. 5d is an enlarged cross-sectional view of the portion of Fig. 5b denoted by the letter "E".

### Detailed Description of the Invention

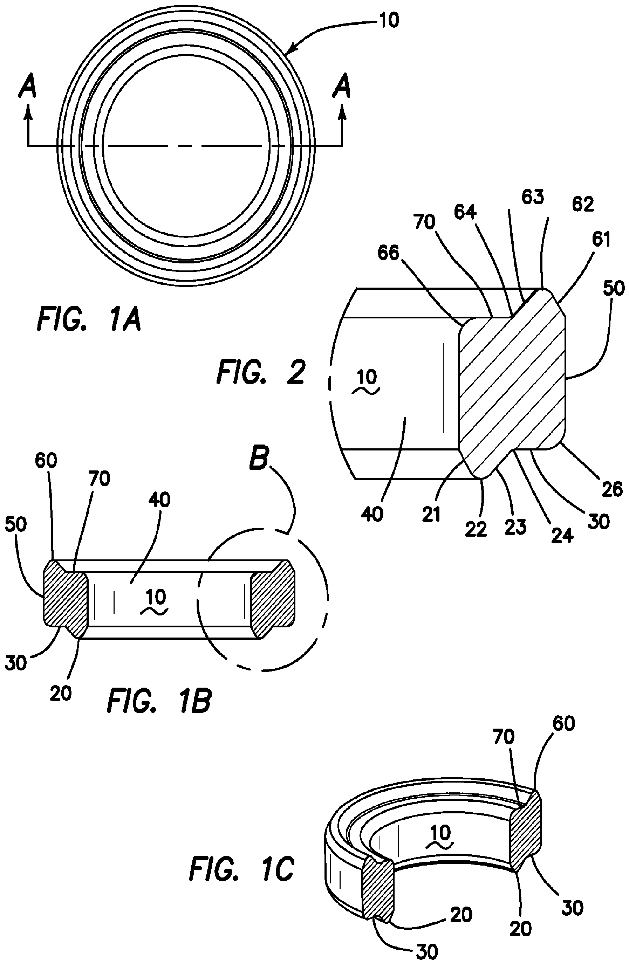

Referring now more particularly to the drawing figures, wherein like reference numerals designate identical or corresponding parts throughout the several views and embodiments, there is shown in Figs. 1a - 1c and Fig. 2 one embodiment of a gasket 10 constructed in accordance with the principles of the present invention. The gasket 10 has an inner raised lip 20 and a smooth straight central axial bore 40, wherein the inner raised lip 20 begins as a nominally 30 degree outward taper 21 therefrom. Upon reaching an axial extent of approximately 0.007", (0.18 mm), the outward taper 21 turns into a smooth curve directed outwardly with a radius of approximately 0.006" (0.15 mm) to form a circular sector 22 of approximately 90 degrees extent, and then begins a further outward taper 23 of nominally 45 degrees in the reverse axial direction. Upon nearly reaching the same axial location as the start of the outward taper 21, the further outward taper 23 turns into a smooth curve 24, which is directed further outward with a radius of approximately 0.004" (0.10 mm), and joints a flat first axial end surface region 30 that is orthogonal to the axis of the gasket central axial bore 40 which defines the fluid pathway hole. The flat first sealing region 30 extends radially approximately 0.005" (0.13 mm) outward, then turns into a smooth curve directed outwardly with a radius of approximately 0.020" (0.51 mm), forming a circular sector 26 of approximately 90 degrees extent, whereupon the straight wall of a gasket outside diameter 50 is formed parallel to the central axis.

In the foregoing embodiment, the profile of an outer raised lip 60 and flat second sealing region 70 transition from the gasket outside diameter 50 are mirror images of the corresponding inner raised lip 20 and flat first sealing region 30. The gasket 10 has a smooth straight outside diameter 50 and an outer raised lip 60, beginning as a nominally 30 degree inward taper 61 therefrom. Upon reaching an axial extent of approximately 0.007" (0.18 mm), the inward taper 61 turns into a smooth curve, directed inwardly with a radius of approximately 0.006" (0.15 mm), forming a circular sector 62 of approximately 90 degrees extent, and then begins a further inward taper 63 of nominally 45 degrees in the reverse axial direction. Upon nearly reaching the same axial location as the start of the 30 degree taper 61, the further inward taper 63 turns into a smooth curve 64 directed further inwardly with a radius of approximately 0.004" (0.10 mm) and joins the flat axial second end surface sealing region 70 that is orthogonal to the axis of the gasket central axial bore 40 which defines the fluid pathway hole. The flat second sealing region 70 extends radially approximately 0.005" (0.13 mm) inwardly, then turns into a smooth curve directed inwardly with a radius of approximately 0.020" (0.51 mm) forming a circular sector 66 of approximately 90 degrees extend, whereupon the straight wall of the gasket smooth central axial bore 40 is formed parallel to the central axis.

The axial spacing between the first sealing region 30 and the second sealing region 70 may be chosen for convenience according to particular dimensions of the corresponding apparatus elements wherein the gasket will be used. In the illustrated embodiment, an axial spacing of approximately 0.058" (1.47 mm) allows the gasket to be used with planar corner-shear joint types intended to provide a nominal gasket compression of 0.012" (0.30 mm) when completely assembled. It should be appreciated that the corner-shear joint mating features may be located at various recessed axial depths within the corresponding apparatus elements, and the same one embodiment may be used with these different combinations.

The gasket 10 may be conveniently machined from round bar stock. It will be apparent to practitioners that the benefits of sealing region protection and self-centering may also be obtained with gaskets made by molding or machining polymer materials such as PFA, but the resistance to diffusion of process fluid or contaminants will be reduced. The round barstock may be stainless steel or Hastelloy C276.

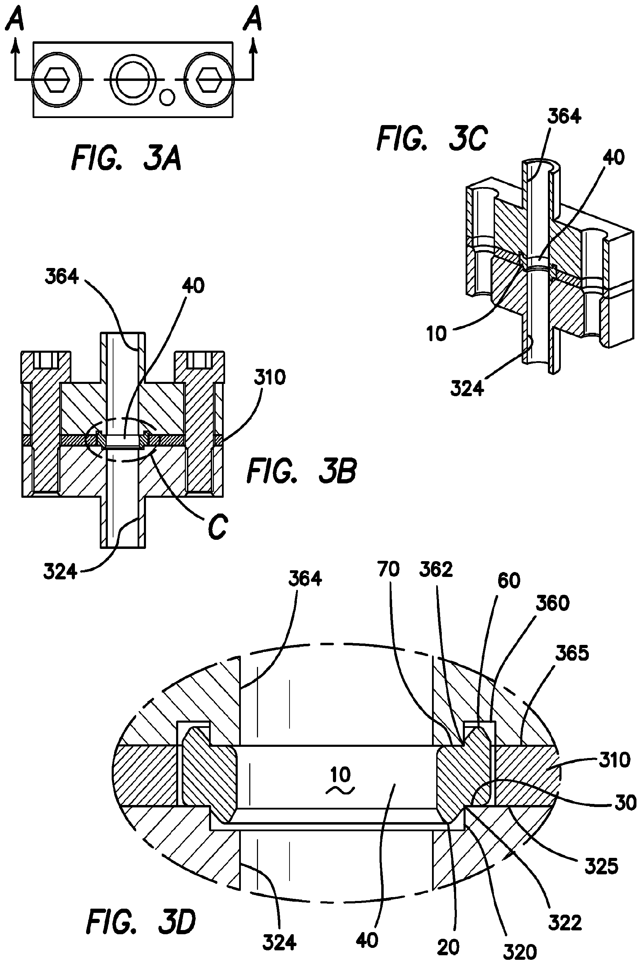

As shown in Figs. 3a - 3d, the inventive gasket 10 may be used with planar corner-shear joint mating features similar to those disclosed in U.S. Patent Nos. 5,803,507 or 6,394,138 wherein the inner raised lip 20 aligns the gasket 10 with a joint counterbore portion 320 and the outer raised lip 60 aligns the gasket 10 with a joint groove portion 360. When the joint is completely assembled, a counterbore corner 322 shears into the gasket first sealing region 30 and a groove portion corner 362 shears into the gasket second sealing region 70. The gasket central axial bore 40 has approximately the same diameter as an upper element conduit port 364, which usually also has the same diameter as a lower element conduit port 324. In this design, the upper and lower device conduit ports 364, 324 usually have the corner features 362, 322 sharpened by lapping the flat surface of the joined elements, which necessarily places the corner features 362, 322 at opposing interface surfaces 365, 325. The joint is best assembled by interposing a thick shim 310 between the opposing interface surfaces 365, 325 to ensure the desired compression (typically 0.012" which converts to about 0.30 mm) of the gasket 10 is achieved and also to provide a hard stop when the full fastener force is applied.

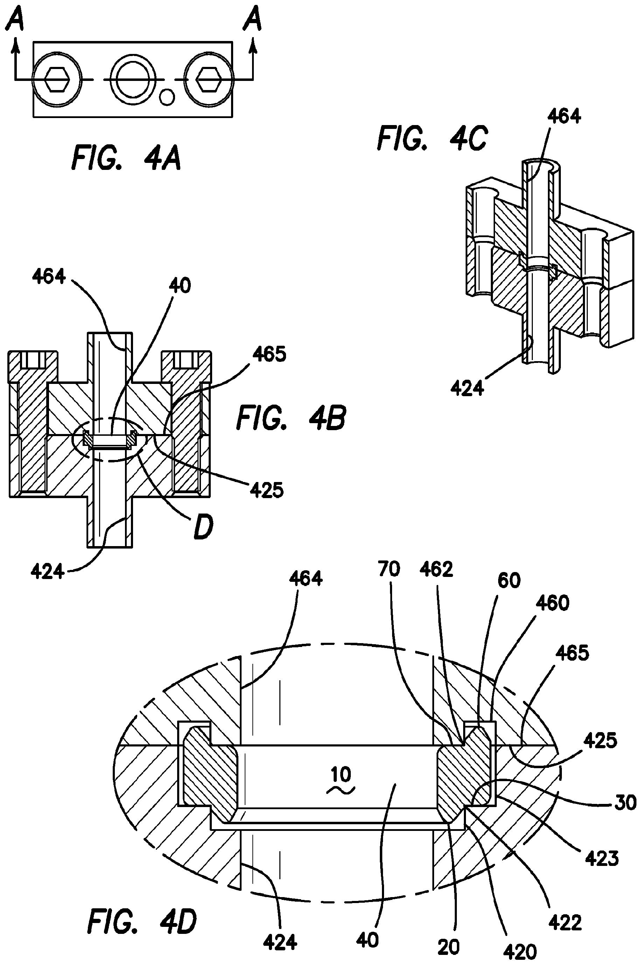

As shown in Figs. 4a - 4d, the inventive gasket 10 may be used with corner-shear joint mating features, wherein some element features have been recessed. As before, the inner raised lip 20 aligns the gasket 10 with a joint counterbore portion 420 and the outer raised lip 60 aligns the gasket 10 with a joint groove portion 460. When the joint is completely assembled, a counterbore corner 422 will shear into the gasket first sealing region 30 and a groove portion corner 462 will shear into the gasket second sealing region 70. The gasket central axial bore 40 has approximately the same diameter as an upper element conduit port 464, which usually also has the same diameter as a lower element conduit port 424. In this alternate apparatus design, the lower device conduit port 424 has a joint counterbore portion 420 and its corner feature 422 placed within a slightly larger counterbore 423 and recessed below a lower element surface 425. Within the included planar upper element design, the joint groove portion 460 corner feature 462 may optionally be sharpened by lapping the flat surface of the upper element. The joint is assembled without any shim between the opposing interface surfaces 465, 425, since the desired compression (typically 0.012" which converts to about 0.30 mm) of the gasket 10 is achieved by selecting the depth of the larger counterbore 423, and a hard stop still occurs when the full fastener force is applied. A similar combination of planar lower element design and recessed upper element design can also be implemented, but is not illustrated in the interest of brevity.

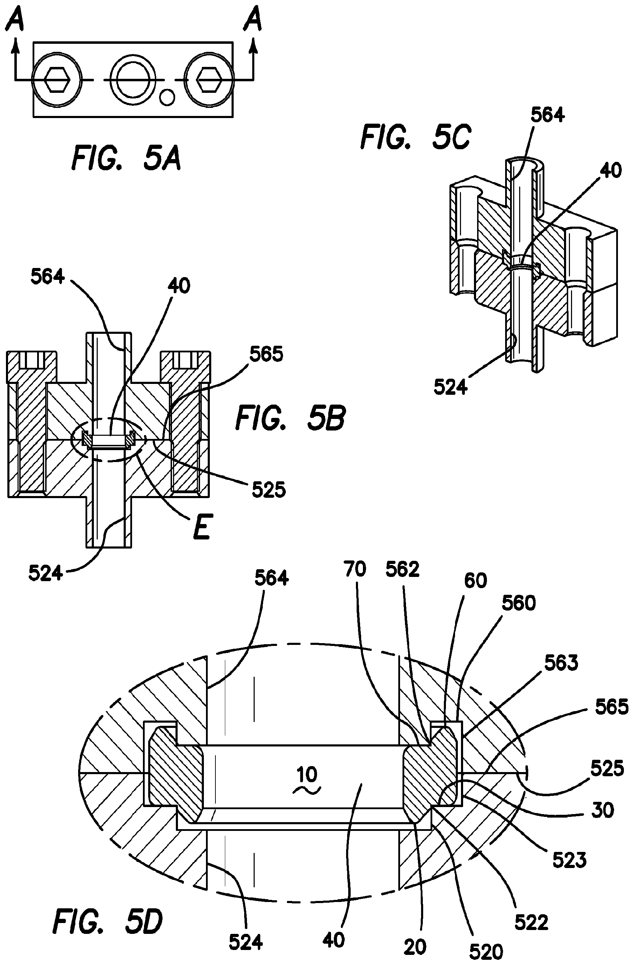

As shown in Figs. 5a - 5d, the inventive gasket 10 may be used with corner-shear joint mating features wherein element features have been symmetrically recessed. As before, the inner raised lip 20 aligns the gasket 10 with a joint counterbore portion 520 and the outer raised lip 60 aligns the gasket 10 with a joint groove portion 560. When the joint is completely assembled, a counterbore corner 522 will shear into the gasket first sealing region 30 and a groove portion corner 562 will shear into the gasket second sealing region 70. The gasket central axial bore 40 has approximately the same diameter as an upper element conduit port 564, which usually also has the same diameter as a lower element conduit port 524. In this other alternative apparatus design, the lower device conduit port 524 has the joint counterbore portion 520 and its corner feature 522 placed within a slightly larger additional counterbore 523 and recessed below an element surface 525. Likewise, the upper device conduit port 564 has the joint groove portion 560 and its corner feature 562 placed within a deeper additional counterbore 563 and recessed above an element surface 565. The joint is assembled without any shim between the opposing interface surfaces 525, 565 since the desired compression (typically 0.012" which converts to about 0.30 mm) of the gasket 10 is achieved by selecting the depth of the matching additional counterbores 523, 563 and a hard stop still occurs when the full fastener force is applied.

Practitioners skilled in the art may further appreciate that the inner raised lip 20 and the outer raised lip 60 are radially displaced with respect to one another (as may be seen in Fig. 2) in all embodiments of the inventive gasket 10, because they originate from opposing edges of the sealing regions 30, 70. Inadvertent virtual leaks and contamination traps within the fluid pathway are avoided by the smooth open form of the inward circular sector 66 adjacent to the axial bore 40 and also the smooth form of the inner raised lip 20 beginning as the nominally 30 degree outward taper 21.

While this application examples and embodiments, it is to be understood that various modifications may be made without departing from the scope thereof. Therefore, the above description should not be construed as limiting the invention, but merely as an exemplification of preferred embodiments thereof and that the invention can be variously practiced within the scope of the following claims.

## Claims

1. A corner-shear joint assembly comprising a fluid passageway formed by assembled members and a malleable gasket (10) disposed in a sealing arrangement within the fluid passageway, the gasket (10) being suitable for high purity fluid delivery systems and comprising a first side, an opposed second side, an outer circumference, a raised inner lip (20) on the first side and a raised outer lip (60) on the second side, the raised outer lip being circumferentially spaced from the raised inner lip (20), the assembled members having a joint comprising each of a joint counterbore portion (320, 420, 520) and a joint groove portion (360, 460, 560), a counterbore corner (322, 422, 522) extending from the joint counterbore portion (320, 420, 520) and a groove portion corner (362, 462, 562) extending from the joint groove portion (360, 460, 560), wherein the inner raised lip (20) aligns the gasket (10) with the joint counterbore portion (320, 420, 520) and the outer raised lip (60) aligns the gasket (10) with the joint groove portion (360, 460, 560), such that when the joint is completely assembled, in use, the counterbore corner (322, 422, 522) shears into a first sealing region (30) of the gasket (10), the first sealing region (30) being flat and disposed outwardly of the raised inner lip (20) on the first side of the gasket (10), and the groove portion corner (362, 462, 562) shears into a second sealing region (70) of the gasket (10), the second sealing region (70) being flat and disposed inwardly of the raised outer lip (60) on the second side of the gasket (10),
**characterized in that**
the gasket (10) is metallic and is machined from a round bar stock comprising stainless steel or hastelloy

2. The corner-shear joint assembly as recited in Claim 1, wherein the gasket (10) is round.

3. The corner-shear joint assembly as recited in Claim 1, wherein the gasket (10) comprises a torus having an inner circumference defining a central axial bore (40).

4. The corner-shear joint assembly as recited in Claim 1, wherein the first side of the gasket (10) is a mirror image of the second side of the gasket (10).

5. The corner-shear joint assembly as recited in Claim 1, wherein the first side of the gasket (10) further comprises a circular sector forming a part of the raised inner lip, an outward tapering portion extending from the circular sector, and a smooth curve extending outwardly from the tapering portion and joining the flat first sealing region.

6. The corner-shear joint assembly as recited in Claim 5, wherein the second side of the gasket (10) further comprises a circular sector forming a part of the raised outer lip, an inwardly tapering portion extending from the circular sector, and a smooth curve extending inwardly from the tapering portion and joining the flat second sealing region.

7. The corner-shear joint assembly as recited in Claim 1, wherein the gasket (10) comprises a torus having an inner circumference defining a central axial bore, and each of the flat first sealing region and the flat second sealing region are substantially orthogonal to the axis of the central axial bore.

## Patentansprüche

1. Eckscherverbindungsanordnung, umfassend einen Fluiddurchgang, der durch montierte Elemente gebildet ist, und eine formbare Dichtung (10), die in einer Dichtungsanordnung innerhalb des Fluiddurchgangs angeordnet ist, wobei die Dichtung (10) für hochreine Fluidabgabesysteme geeignet ist und eine erste Seite, eine gegenüberliegende zweite Seite, einen Außenumfang, eine erhabene Innenlippe (20) auf der ersten Seite und eine erhabene Außenlippe (60) auf der zweiten Seite umfasst, wobei die erhabene Außenlippe in Umfangsrichtung von der erhabenen Innenlippe (20) beabstandet ist, wobei die montierten Elemente eine Verbindung aufweisen, die jedes von einem Verbindungsgegenbohrungsabschnitt (320, 420, 520) und einem Verbindungsnutabschnitt (360, 460, 560) umfasst, wobei sich eine Gegenbohrungsecke (322, 422, 522) von dem Verbindungsgegenbohrungsabschnitt (320, 420, 520) erstreckt und sich eine Nutabschnittsecke (362, 462, 562) von dem Verbindungsnutabschnitt (360, 460, 560) erstreckt, wobei die innere erhabene Lippe (20) die Dichtung (10) mit dem Verbindungsgegenbohrungsabschnitt (320, 420, 520) ausrichtet und die äußere erhabene Lippe (60) die Dichtung (10) mit dem Verbindungsnutabschnitt (360, 460, 560) ausrichtet, sodass bei vollständiger Montage der Verbindung die Gegenbohrungsecke (322, 422, 522) im Gebrauch in einen ersten Dichtungsbereich (30) der Dichtung (10) schert, wobei der erste Dichtungsbereich (30) flach ist und nach außen von der erhabenen Innenlippe (20) auf der ersten Seite der Dichtung (10) angeordnet ist, und die Nutabschnittsecke (362, 462, 562) in einen zweiten Dichtungsbereich (70) der Dichtung (10) schert, wobei der zweite Dichtungsbereich (70) flach ist und nach innen von der erhabenen Außenlippe (60) auf der zweiten Seite der Dichtung (10) angeordnet ist, **dadurch gekennzeichnet, dass** die Dichtung (10) metallisch ist und aus einem Rundstangenmaterial, umfassend Edelstahl oder Hastelloy, gefertigt wird.

2. Eckscherverbindungsanordnung nach Anspruch 1, wobei die Dichtung (10) rund ist.

3. Eckscherverbindungsanordnung nach Anspruch 1, wobei die Dichtung (10) einen Torus mit einem Innenumfang umfasst, der eine zentrale axiale Bohrung (40) definiert.

4. Eckscherverbindungsanordnung nach Anspruch 1, wobei die erste Seite der Dichtung (10) ein Spiegelbild der zweiten Seite der Dichtung (10) ist.

5. Eckscherverbindungsanordnung nach Anspruch 1, wobei die erste Seite der Dichtung (10) ferner Folgendes umfasst: einen kreisförmigen Sektor, der einen Teil der erhabenen Innenlippe bildet, einen sich nach außen verjüngenden Abschnitt, der sich vom kreisförmigen Sektor erstreckt, und eine glatte Kurve, die sich vom verjüngenden Abschnitt nach außen erstreckt und den flachen ersten Dichtungsbereich verbindet.

6. Eckscherverbindungsanordnung nach Anspruch 5, wobei die zweite Seite der Dichtung (10) ferner Folgendes umfasst: einen kreisförmigen Sektor, der einen Teil der erhabenen Außenlippe bildet, einen sich nach innen verjüngenden Abschnitt, der sich vom kreisförmigen Sektor erstreckt, und eine glatte Kurve, die sich vom sich verjüngenden Abschnitt nach innen erstreckt und den flachen zweiten Dichtungsbereich verbindet.

7. Eckscherverbindungsanordnung nach Anspruch 1, wobei die Dichtung (10) einen Torus mit einem Innenumfang umfasst, der eine zentrale axiale Bohrung definiert, und jeder des flachen ersten Dichtungsbereichs und des flachen zweiten Dichtungsbereichs im Wesentlichen orthogonal zur Achse der zentralen axialen Bohrung verläuft.

## Revendications

1. Ensemble joint à cisaillement de coin comprenant un passage de fluide formé par des éléments assemblés et un joint d'étanchéité malléable (10) disposé dans un agencement d'étanchéité à l'intérieur du passage de fluide, le joint d'étanchéité (10) convenant à des systèmes de distribution de fluide de haute pureté et comprenant un premier côté, un second côté opposé, une circonférence externe, une lèvre interne surélevée (20) sur le premier côté et une lèvre externe surélevée (60) sur le second côté, la lèvre externe surélevée étant espacée circonférentiellement de la lèvre interne surélevée (20), les éléments assemblés possédant un joint comprenant chacune d'une partie de lamage de joint (320, 420, 520) et d'une partie de rainure de joint (360, 460, 560), un coin (322, 422, 522) de lamage s'étendant à partir de la partie de lamage de joint (320, 420, 520) et un coin de partie de rainure (362, 462, 562) s'étendant à partir de la partie de rainure de joint (360, 460, 560), ladite lèvre interne surélevée (20) alignant le joint d'étanchéité (10) avec la partie de lamage de joint (320, 420, 520) et ladite lèvre externe surélevée (60) alignant le joint d'étanchéité (10) avec la partie de rainure de joint (360, 460, 560), de sorte que lorsque le joint est complètement assemblé, lors de l'utilisation, le coin (322, 422, 522) de lamage se cisaille dans une première zone d'étanchéité (30) du joint d'étanchéité (10), la première zone d'étanchéité (30) étant plate et disposée vers l'extérieur de la lèvre interne surélevée (20) sur le premier côté du joint d'étanchéité (10), et le coin de la partie de rainure (362, 462, 562) se cisaille dans une seconde zone d'étanchéité (70) du joint d'étanchéité (10), la seconde zone d'étanchéité (70) étant plate et disposée vers l'intérieur de la lèvre externe surélevée (60) sur le second côté du joint d'étanchéité (10), **caractérisé en ce que** le joint d'étanchéité (10) est métallique et est usiné à partir d'un matériau en forme de barre ronde comprenant de l'acier inoxydable ou de l'hastelloy.

2. Ensemble joint à cisaillement de coin selon la revendication 1, ledit joint d'étanchéité (10) étant rond.

3. Ensemble joint à cisaillement de coin selon la revendication 1, ledit joint d'étanchéité (10) comprenant un tore possédant une circonférence interne définissant un alésage axial central (40).

4. Ensemble joint à cisaillement de coin selon la revendication 1, ledit premier côté du joint d'étanchéité (10) étant une image miroir du second côté du joint d'étanchéité (10).

5. Ensemble joint à cisaillement de coin selon la revendication 1, ledit premier côté du joint d'étanchéité (10) comprenant en outre un secteur circulaire faisant partie de la lèvre interne surélevée, une partie effilée vers l'extérieur s'étendant à partir du secteur circulaire, et une courbe lisse s'étendant vers l'extérieur à partir de la partie effilée et joignant la première zone d'étanchéité plate.

6. Ensemble joint à cisaillement de coin selon la revendication 5, ledit second côté du joint d'étanchéité (10) comprenant en outre un secteur circulaire formant une partie de la lèvre externe surélevée, une partie effilée vers l'intérieur s'étendant à partir du secteur circulaire, et une courbe lisse s'étendant vers l'intérieur à partir de la partie effilée et joignant la seconde zone d'étanchéité plate.

7. Ensemble joint à cisaillement de coin selon la revendication 1, ledit joint d'étanchéité (10) comprenant un tore possédant une circonférence interne définissant un alésage axial central, et chacune de la première zone d'étanchéité plate et de la seconde zone d'étanchéité plate étant sensiblement orthogonale à l'axe de l'alésage axial central.
